# EUROPEAN PATENT SPECIFICATION

(11) **EP 1 829 412 B1**
(45) Date of publication and mention of the grant of the patent: **20.02.2013**
(21) Application number: 05821246.5
(22) Date of filing: 20.12.2005
(51) Int. Cl.: H04W 4/00, H04L 12/16

(54) **PROVIDING COMMUNICATION GROUP INFORMATION TO A CLIENT**
BEREITSTELLUNG VON KOMMUNIKATIONSGRUPPENINFORMATIONEN FÜR EINEN CLIENT
ENVOIE D' INFORMATIONS SUR UN GROUPE DE COMMUNICATION A UN CLIENT

(30) Priority: 22.12.2004 SE 0403133
(43) Date of publication of application: 05.09.2007
(73) Proprietor: Telefonaktiebolaget L M Ericsson (publ), 164 83 Stockholm (SE)
(72) Inventor: BOBERG, Christer, S-137 55 Tungelsta (SE); LINDGREN, Anders, S-125 74 Älvsjö (SE); DANNE, Anders, S-164 41 Kista (SE)
(74) Representative: Sjöberg, Mats Hakan
(86) International application number: PCT/SE2005/001984
(87) International publication number: WO 2006/083203

(56) References cited:
- US-A- 5 694 393
- US-A- 5 724 648
- US-A1- 2003 012 149
- US-B1- 6 442 396
- 3GPP DRAFT; OMA-AD-POC_V1_0-20040430-D, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CN WG1, no. Zagreb, Croatia; 20040501, 1 May 2004 (2004-05-01), XP050070695, [retrieved on 2004-05-01]

## Description

### TECHNICAL FIELD

The present invention relates generally to a method and arrangement for providing communication group information to a client. In particular, the invention is intended to make retrieval of information regarding active communication groups easier and more efficient.

### BACKGROUND OF THE INVENTION AND PRIOR ART

Until recently, mobile communication terminals have been used mainly for making voice calls and communicating limited text messages, such as SMS (Short Message Service). These are fairly straightforward telecommunication services which use well-established technologies for chiefly circuit-switched single connections.

However, a multitude of new telephony services are now rapidly being developed, which are enabled by the introduction of new communication technologies providing greater network capacity and higher transmission rates. For example, GPRS (General Packet Radio Service) and WCDMA (Wideband Code Division Multiple Access) technologies are currently emerging to support wireless telephony services requiring a wide range of data rates and different protocols. The trend today is also a move towards packet-switched transport, providing greater capacity and flexibility. Further, new sophisticated terminals are also emerging on the market, having colour displays with high resolution and various codecs (coders/decoders) for communicating visual information.

Some services may involve real-time transmission of video information as well as audio information, and may further include the transmission of data representing images, text, documents, audio files and video files in a multitude of different formats and combinations. Such services are generally referred to as "multimedia" services, which term will be used in this description to represent any telephony services that involve the transfer of information in addition to an ordinary voice call.

A prevailing goal or ambition in the field of telecommunication is to converge all services on to a single transport mechanism - the Internet Protocol (IP), regardless of the type of services, access networks and technologies. Recently, a service network architecture called "IP Multimedia Subsystem" (IMS) has been developed by the 3^{rd} Generation Partnership Project (3GPP) as an open standard, to give operators of access networks the ability to offer multimedia services in the packet domain.

An IMS network comprising various different network elements to handle the services, can be integrated with any type of access network and is independent of the access technology used, provided that the access network can meet the service requirements in terms of bandwidth, QoS (Quality of Service), etc. Hence, IMS is a platform for enabling services based on IP transport, not restricted to any limited specific set of services. A communication protocol called the "Session Initiation Protocol" (SIP) has been defined by IETF (Internet Engineering Task Force) as a generic session management protocol to support a wide range of IP-based services. SIP is purely a signalling protocol for creating, modifying and terminating communication sessions with one or more participants.

Some services that can be employed e.g. by means of the IMS solution involve communication within a group of plural participants, sometimes referred to as a "buddy list". A client can create a group by selecting the members to be included in the group, and by invoking a service for some type of communication between the members within that group. When the service is invoked and the group is created, certain communication rules are also defined to determine how the communication should be conducted. The service requires that one or more applications are activated in the service network.

For example, a voice chat group can be created and the communication form may be determined to be a so-called "push-to-talk" mechanism, such as the IMS concept POC (Push-to-talk Over Cellular). A member in the group can then press a certain key or combination of keys on his/her mobile terminal to activate one-way voice paths to each of the other members in the group whenever he/she wants to say something, sometimes referred to as half duplex. In another example, a game group may be created to play an electronic game in real-time involving the group members. In further examples, text messages, documents or images may be exchanged within the group, or a conference call using voice paths in full duplex may be conducted.

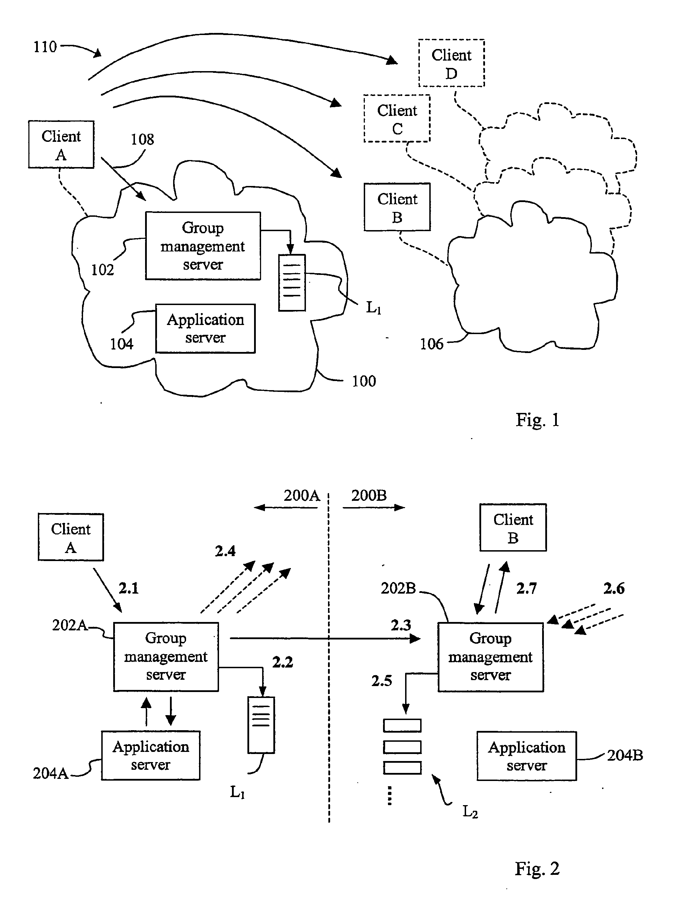

Fig. 1 illustrates a communication scenario for creating a communication group according to the prior art. A first mobile client "A" belongs to a home network 100, e.g. by means of a subscription with that network, which is capable of providing communication group services by means of an IMS network. It is assumed that a service core (not shown), in this case an IMS core, is implemented in network 100 for handling communication sessions as various services are activated.

Among other things, network 100 includes a server 102 or the like for maintaining application configuration data for active services and clients, in particular communication groups. In this description, this server is called a "group management server" 102, referring to its function in this context. In the IMS case, server 102 may include an "XCAP" (XML Configuration Access Protocol) server handling the configuration data stored in an XML (extensible Mark-up Language) format, and/or an "XDMS" (XML Data Management Server). Network 100 further includes a plurality of application servers 104, of which only one is shown, for operating various applications as required to provide specific services to clients. In this case, application server 104 is adapted to handle group services for client A.

Client A wants to create a discussion group using voice chatting, with selected members including a second client "B" belonging to another mobile network 106, as well as any number of further clients C,D... belonging to other home networks, as indicated by dashed lines in the figure. It should be noted that the clients A,B,C,D... need not necessarily use their respective home networks as access networks, but may just as well be roaming in other networks. Further, some of the clients A,B,C,D... may belong to the same home network, etc.

In order to establish a chat group comprising the clients A,B,C,D... with the network 100, client A initially sends a group establishment request 108 to the group management server 102 in network 100. This message 108 generally comprises the identity and network address for each member and an indication of the invoked service. In response thereto, a group identity is defined for that group, which may be configured by a subscriber management server or the like, not shown, in the home network 100, such as an HSS (Home Subscriber Server). The group identity is typically a network address to be used by group members for contacting the network resource handling the group. For example, if the group is a conference group, the group identity would be the network address of a conference bridge used. Further, the invoked service requires that certain applications are activated in the associated application server 104. Hence, the defined group identity will also point to a specific application server 104 to handle the invoked service for client A.

In the context of IMS, the group establishment request 108 is an XCAP message having a specific address field which is used for storing the group at the correct position in an XML database. Further, the group identity is a PSI (Public Service Identifier), typically an SIP URI (Unified Resource Identifier).

The group identity, in this case PSI, is thus stored in the group management server 102 together with a list of group member identities and relevant application configuration data (in XML format) according to the invoked service, as schematically represented by a member list L₁. The above-mentioned protocol XCAP allows the client A to read, write and modify the application configuration data at any time when the group exists. In particular, client A can add new members to the group, or remove members from the group, or terminate the group altogether.

Then, after the group has been established, any member can communicate information, e.g. voice, to all the other members in the group by activating the group service. In IMS services, the used terminal will then first issue a message called SIP INVITE (PSI), or "INVITE PSI", to the IMS network whenever he/she wants to transmit information to the others, in order to establish a communication path to each member.

Currently, it is a problem that there is no automatic mechanism for notifying the selected members in the group on the fact that they have become members in the created group. Hence, it is up to the group creator, i.e. client A, to inform the other clients on their membership, e.g. by calling or sending an e-mail, SMS, or the like to each member. This may be a tiresome task if many members are included in the group. There is also a potential risk that this information is lost or improperly intercepted by others.

Another problem is that since other clients may likewise create their groups with selected members, and each corresponding group list will be stored in the home IMS network of its creator, a specific client may be present in several group lists, each being stored locally in different nodes and networks depending on the group creators. As a result, it becomes increasingly difficult for mobile users to keep track on active communication groups when participating in plural groups, Therefore, a user may sometimes not be aware of being a member in a certain group.

Moreover, there is neither any automatic mechanism for letting members know that a group has been terminated, and again the group creator must inform them on this fact. Basically, a created group will exist until its creator terminates the group.

For example, a client may want to reject membership in unwanted groups, or may simply want to investigate which

groups he/she is a member of. Currently, the only method available for retrieving group membership is to conduct a search in each network, which is cumbersome, unreliable and generates much network traffic if plural networks are searched. A simple and reliable solution is therefore needed for making information on group membership available to clients such that a client can easily find out which active communication groups he/she is a member of.

OMA-Push to talk over cellular PoC-Architecture, Draft version 1.0 discloses group advertising is used to inform PoC group members about the existence and the membership of the group and receiving a group creation request from a first client in a first group management server in a home network of the first client for a new communication group that includes at least one second client and storing a member list of members in said group including the second client. GLMS A shall create & modify group(s) according to the indication in the request and has a member list. A group event notification from the first group management server to a second group management server in a home network of the second client is sent to announce that the second client is a member of the new communication group.

US 5694393 A. US discloses that groups may be formed dynamically and subscribers may be the members of more than one group. Membership of the group is also recorded in the individual's subscriber record, and all copies of the record along the snail trail to the individual's home node HN are similarly updated by means of a joint notification.

### SUMMARY OF THE INVENTION

The object of the present invention is to reduce or eliminate the problems outlined above. In particular, it is an object to enable the retrieval or reception of membership information in active communication groups such that a client can find out which groups he/she is currently a member of.

This object and others are obtained by a method for making communication group information available to group members according to claim 1.

According to the present invention these is also a group communication server according to claim 10.

The present invention further encompasses a communication system for making communication group information available to group members according claim 20.

Further embodiments as provided according to the dependent claims.

Further features and benefits of the present invention will be apparent from the detailed description below.

### BRIEF DESCRIPTION OF THE DRAWINGS

The present invention will now be described in more detail by means of preferred embodiments and with reference to the accompanying drawings, in which:
- Fig. 1 is a block diagram illustrating a procedure for creating a communication group, according to the prior art.
- Fig. 2 is a block diagram illustrating a procedure for creating a communication group, in accordance with the present solution.
- Fig. 3 is a block diagram illustrating a procedure for modifying a communication group by adding a member, according to one embodiment.
- Fig. 4 is a block diagram illustrating a procedure for modifying a communication group by removing a member, according to another embodiment.
- Fig. 5 is a block diagram illustrating a procedure for rejecting membership in a communication group, according to another embodiment.
- Fig. 6 is a flow chart illustrating a procedure for managing membership in a communication group, in accordance with one aspect of the present solution.
- Fig. 7 is a flow chart illustrating a procedure for managing membership in a communication group, in accordance with another aspect of the present solution.
- Fig. 8 is a schematic block diagram of a group management server, in accordance with the present solution.

### DESCRIPTION OF PREFERRED EMBODIMENTS

It should be noted that the present invention is concerned with the management of membership in communication groups independent of what type(s) of communication service is used. Thus, no description of how the group services per se are invoked or used is necessary to understand the present invention, and the following detailed description will therefore focus on group membership rather than the services themselves.

A preferred embodiment of the present invention will now be described, initially with reference to Fig. 2. The block diagram shown in the figure is logically divided into two domains by means of a dashed central border line, with the home network domain 200A of a first client A to the left and the home network domain 200B of a second client B to the right. As in Fig. 1, the home network of client A is capable of providing services to its clients involving the creation of communication groups. Each network domain 200A, 200B comprises a group management server 202A and 202B, respectively, and an application server 204A and 204B, respectively. The group management servers 202A and 202B could be similar to each other but they will act differently in the context of the present solution, as will be apparent from the description below. Thus, in addition to the functions described below, server 202A may be further configured to have the same functions as server 202B, and vice versa. The present invention is generally not limited to any particular types of servers 202A and 202B, as long as they can execute the fundamental steps of the present solution.

As in the known procedure described above, client A intends to establish a communication group using some kind of group service, e.g. as mentioned above. The group will contain members selected by the client A, including client B. As in the previous example, the clients A and B could be currently connected to networks other than their home networks, but they can of course still communicate with their home networks as described below. The detailed mechanisms for this communication are not necessary to describe to understand the present solution.

First, client A sends a group creation request in a step **2.1** to the group management server 202A in network 200A, comprising information on the identity and network address for each selected member in the group, and an indication of the invoked service. The group creation request may also contain a name for the group in free text as optionally defined by client A, hereafter generally referred to as "group name", such as a nickname, a description, a type of group or the like, e.g. "A's football team". The group creation request further contains a proposed group identity in the form of a network address, such as "sip:myteam@league.com". The server 202A then assigns an identity to the group, e.g. the proposed one. If the proposed group identity is occupied or invalid in some way, the network will reject the proposed group identity and optionally propose another one. The assigned group identity (and group name, if received) is then stored together with the received identity/address data for all members and configuration data related to the invoked service in a member list L₁, as illustrated by a next step **2.2**. So far, the procedure is basically the same as in the known prior art described in connection with Fig. 1.

According to the present solution, the server 202A further sends a "group event notification" in a step **2.3** to the group management server 202B in the network 200B of client B, in order to announce that a group has been created in which client B is included as a member. This notification contains the event type (e.g. "added group member"), an identity of the group, e.g. PSI, and also preferably the group name received as above. If an IMS network is used, the group event notification is preferably sent in step 2.3 as an SIP publish message, called "SIP PUBLISH". In a preferred embodiment, this message is directed to the network address of client B, and the network 200B (e.g. a SIP network) is configured to route the message to the server 202B instead of client B when the combination of event type and client B's address (URI) is received. Thereby, server 202A does not need to retrieve the address (URI) of server 202B.

In fact, the server 202A also sends the group notification to corresponding group management servers in the home domains of the other selected members in the group, not shown, as schematically illustrated with dashed arrows in a step **2.4**. In addition, the assigned group identity, e.g. PSI, may also be sent (not shown) to client A which he/she will use as a reference in order to make any modifications to the group, such as adding or removing members.

On the other side, group management server 202B in network 200B stores the received group identity (and group name, if received) in a step **2.5**. In the same way, server 202B may potentially also receive further similar group notifications from other corresponding group management servers in other networks, not shown, whenever a group is established where client B is included as a member, as schematically illustrated in a step **2.6** with dashed arrows. When such group notifications are received, server 202B stores the accompanying group identities (e.g. PSI's) in a group list L₂ for this particular client B. The group list L₂ for client B is thus accumulated over time and may potentially contain a plurality of group identities (and corresponding group names) as received from group management servers in various networks.

Thereby, the information on active group memberships for a specific client, in this case B, is collected at a single location in server 202B that can easily be accessed by the client. Accordingly, a step **2.7** finally illustrates that client B fetches this information from the group list L₂ by making a suitable membership information request to server 202B (e.g. "GELT PSI's"). In practice, the lists L₁ and L₂ may be stored and maintained in any suitable way, such as in storage means within the respective server, or in separate database nodes. The present invention is thus not limited in this respect.

Furthermore, a limited time period, e.g. "TTL (Time To Live)", may be set for the member list L₁ of a created group during which the list is considered to be valid. The group management server handling the list may be configured to "refresh" the list just before expiry of a TTL, or regularly (e.g. once a week), if the group is continued, by sending a refresh message with a new TTL to all members in the list, or rather to their respective home networks, even if no changes have been made.

Generally, a client can at any time obtain a valid group list from a local group management server in the home network. It is further possible for a client, e.g. client B, to reject membership in any unwanted group that may occur on his/her group list, e.g. by sending a suitable reject message to the local home server, e.g. server 202B (to be described in more detail below). The reject message will then be communicated to the group management server where the rejected group is maintained, e.g. server 202A, wherein the withdrawing client will be deleted from the member list of the group, e.g. list L₁. Optionally, the withdrawing client B may retrieve addressing information on server 202A from the local server 202B, which can be used to communicate a reject message directly to server 202A.

In Fig. 2, a procedure was illustrated for making membership information easily available when a new communication group is created. As mentioned above, a client may not be aware of being a member in certain groups. Thus at any time, client B can retrieve the group list L₂ from server 202B in order to find out exactly which groups he/she is a member of, by receiving a group membership notification in response to sending a suitable membership information request message to the group management server 202B. According to alternative embodiments, a group membership notification may be automatically sent to client B from server 202B as soon as he/she has become a member of a communication group, or more generally whenever his/her group list L₂ is changed in any way. A client may thus subscribe to such events, e.g. by means of a SIP message "SIP SUBSCRIBE", (event = SIP-profile) and automatically receive notifications on occurring group membership events.

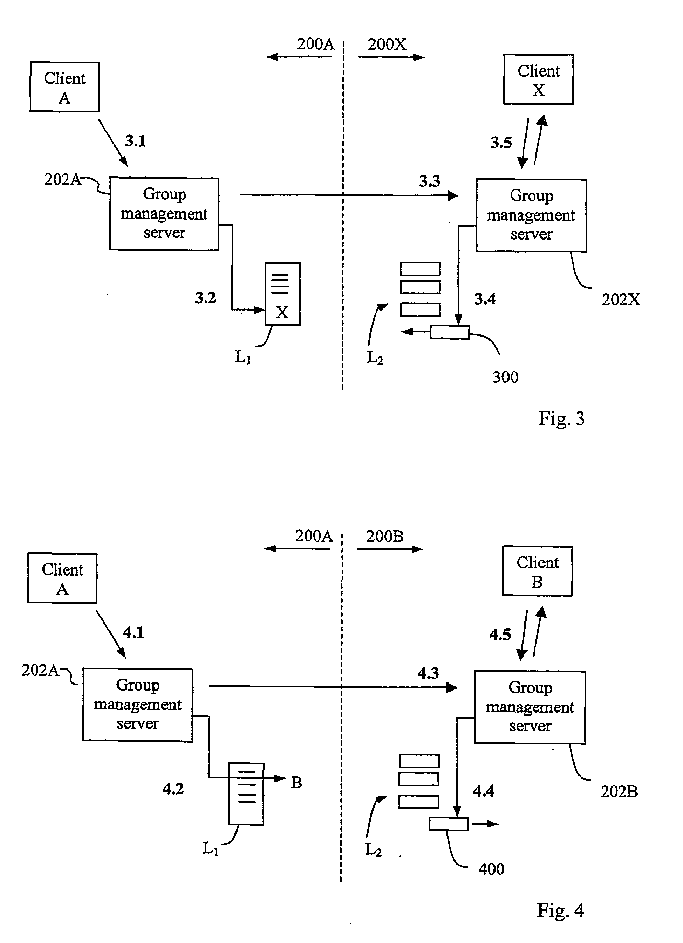

In a similar manner, client A may also modify an already existing member list L₁, as created according to the above, for example by adding a new member X to the group, which is illustrated in the block diagram shown in Fig. 3. In this figure, corresponding elements have the same reference numbers as in Fig. 2, although "B" has been changed to "X".

Client A first sends a group modification request to the group management server 202A in a step 3.1 containing the group identity (e.g. PSI) and an instruction to add client X to the group, including his/her identity and network address. In response thereto, server 202A adds client X to the member list L₁ of the group, in a step 3.2. Server 202A further sends a group event notification (e.g. SIP PUBLISH) in a step 3.3 to the group management server 202X, containing the event type (e.g. "added group member"), the group identity (e.g. PSI) and optionally an associated group name, to announce that client X is now a member in the group. The message sent in step 3.3 may basically be the same as the one sent in step 2.3 in the previous example.

In the present example, it is assumed that the group management server 202X maintains a group list L₂ on behalf of client X, containing one or more groups in which client X is currently a member. In response to receiving the group event notification in step 3.3, server 202X adds an entry 300 in the list with the new group owned by client A, in a step **3.4**. Thereby, client X can at any time fetch the list from server 202X, as illustrated in a step **3.5**, and find out that he/she has become a member in the group of client A.

In a similar manner, client A may also modify the member list L₁ for the group by removing a member therein from the group, which is illustrated in the block diagram shown in Fig. 4. Also in this figure, corresponding elements have the same reference numbers as in Fig. 2.

Client A first sends a group modification request to the group management server 202A in a step **4.1** containing the group identity (e.g. PSI) and an instruction to remove client B from the group. In response thereto, server 202A deletes client B from the member list L₁, in a step **4.2**. Server 202A may also send a membership invalidity message in a step **4.3** to server 202B, to announce that client B is no longer a member in the group. The server 202A can effectively remove the group from the group list L₂ in server 202B by sending a refresh message for member B with the TTL set to zero as the membership invalidity message, thereby indicating that B's membership has become invalid. The refreshed event state will then expire immediately and server 202B consequently deletes the group from list L₂. As similar to the previous examples, the changed TTL may be addressed to client B but will be routed to server 202B based on the combination of event type/client B.

In response to receiving the membership invalidity message in step 4.3, e.g. with TTL=0, server 202B deletes an entry 400 for client A's group from the list, in a step **4.4.** When retrieving or receiving the list at a later point in a step **4.5,** client B will find out that he/she is no longer a member in the group created by client A.

Alternatively, server 202A may simply refrain from sending any further refresh messages to client B, which sooner or later results in expiry of the group entry in the list L₂, depending the current TTL value. Thereby, step 4.3 can be omitted, but the group entry will linger in the list for a while until expiry.

If a group is terminated altogether, a similar procedure may be executed as described in the previous example of Fig. 4. However a difference is that server 202A then cancels the entire list L₁ and sends a membership invalidity message to the group management servers of each and every member, as in step 4.3 above, preferably as a refresh message with TTL=0 for all members, thereby indicating that their memberships have become invalid. In this way, each associated network becomes informed that their clients are no longer members in the group and consequently deletes the group from the corresponding group list.

Alternatively, it would be sufficient to refrain from sending any further refresh message to any client, sooner or later resulting in expiry of the group in each local server. Thus, the networks will delete the entry for client A's group from the group lists of all members, such that all clients in the former group can find out that they are no longer members in the group when retrieving the list.

As mentioned above, a client may use the group information to reject membership in any unwanted group occurring on his/her group list. Thus, if a client desires not to take part in the communication in a specific group, all traffic occurring within the group directed to this client can be blocked by the service network of that client. However, the mechanisms for blocking group communication to a specific client lie outside the scope of the present invention and will therefore not be described here further. Alternatively, the client may actively withdraw his/her membership, as described below.

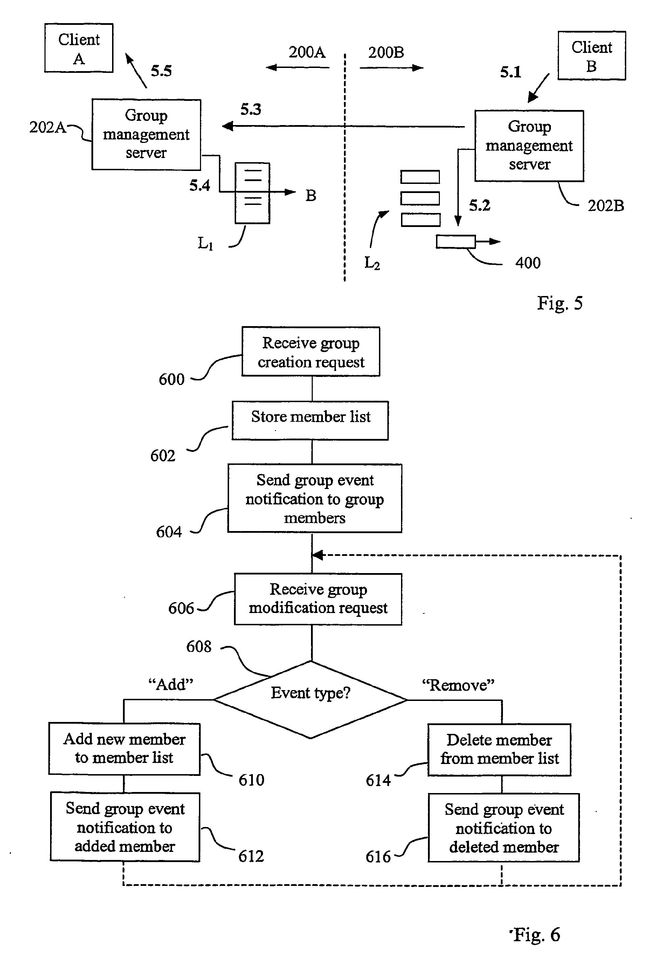

A more detailed example of an alternative procedure when client B rejects membership in the group created by client A, will now be described with reference to Fig. 5. Initially, the withdrawing client B sends a group reject message to the group management server 202B in his/her home network 200B, in a first step **5.1.** Server 202B then deletes the entry 400 for this group from the group list L₂, in a next step **5.2.** Server 202B further sends a corresponding membership rejection message to the group management server 202A where the rejected group is maintained, in a step **5.3,** to announce that the withdrawing client B has withdrawn from the group. In response thereto, server 202A deletes the withdrawing client B from the member list L₁ of the group, in a next step **5.4.** Moreover, server 202A may in a final step **5.5** optionally send a suitable member withdrawal message to the group creator client A, announcing that client B has withdrawn from the group.

In the previously described procedures illustrated in Fig's 2-5, it should be understood that the various steps must not always necessarily be executed in the given order. For example, server 202A may execute step 2.3 before step 2.2, or step 3.3 before step 3.2, or step 4.3 before step 4.2, or step 5.5 before step 5.4. Likewise, server 202B may execute step 5.3 before step 5.2, and so forth.

With reference to the flow chart shown in Fig. 6, a basic procedure will now be described for making group membership information easily available to members in a communication group, in accordance with the present invention. This procedure is executed in a suitable server or the like in a service network capable of providing group communication services to clients, such as server 202A in the examples of Fig. 2, 3 or 4.

In a first step 600, a group creation request is received from a client, such as in step 2.1 in Fig. 2, specifying a plurality of members to be incorporated in a new group. In a next step 602, a member list is created and stored for the requested group, such as in step 2.2 in Fig. 2. Further, a group event notification is sent to each member in the group, or rather to a corresponding group management server in the home network of each member, to inform each respective network that their client has become a member in the new group, in a next step 604, such as the message sent in step 2.3 in Fig. 2. As mentioned above, the group event notification can be routed to such a server even when addressed to the member/client.

In its most basic form, the procedure could end there, after step 604, if no changes are made to the group. However, at some time in a next step 606, a group modification request is received from the client having created the group, such as any of the requests received in steps 3.1 and 4.1 in Fig's 3 and 4, respectively. It is then determined in a step 608 which type of event the request refers to, i.e. what modification the client wants to make. If a certain member, as specified in the request, is to be added to the group, e.g. according to the procedure in Fig. 3, this member is added to the corresponding member list in a step 610. A group event notification is then sent to the new member (or rather to a group management server in his/her home network) in a step 612, to inform his/her home network that he/she has become a member in this group.

Alternatively, if a member is to be removed from the group, this member is deleted from the member list in a step 614, e.g. as in step 4.2 in Fig 4. A group event notification, e.g. the membership invalidity message of step 4.3, is then sent to the omitted member (or rather to a group management server in his/her home network) in a step 616, to inform his/her network that he/she is no longer a member in the group. After either of step 612 and step 616, the process may return to step 606 if a further group modification request is received. It should be noted that steps 614 and 616 can basically also be executed if the group is terminated altogether, in which case the process would be completed after sending the group event notification to all members in step 616.

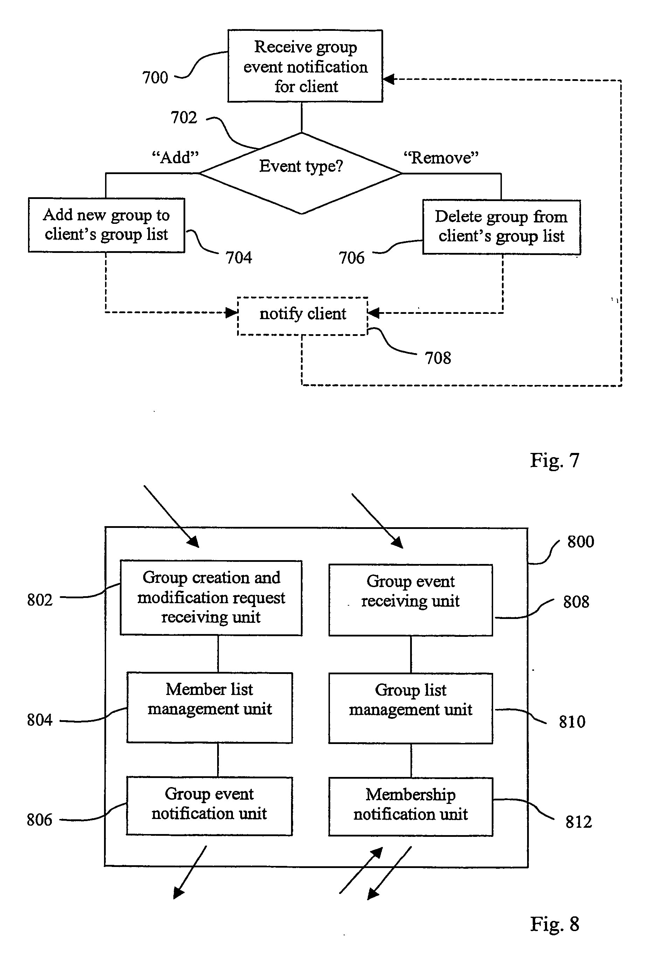

The above-described procedure of Fig. 6 will now be described as executed in a group management server in an opposite network of a member in the group, with reference to the flow chart shown in Fig. 7, such as server 202B in the examples of Fig. 2 or 4, or server 202X in the example of Fig. 3. However, server 202A may also be configured to executed this procedure in a similar situation.

In a first step 700, a group event notification for a specific client is generally received from a server in another network, as the one sent in step 604 above. It is then determined in a step 702 what type of event the notification refers to. If the client has become a member in a group, a new entry for this group is added to an associated group list of the client, in a step 704, e.g. according to step 2.5 in Fig. 2 or step 3.4 in Fig. 3. It should be noted that the group may be either a newly created group or an already existing one. On the other hand, if the client is removed from a group, e.g. by receiving a membership invalidity message as in step 4.3 in the procedure of Fig. 4, this group is deleted from the member list in a step 706. After either of step 704 and step 706, a notification may optionally be sent to the client, in a step 708, if the server is configured to do so automatically, otherwise upon request. In any case, the process may return to step 700 if a further group event notification is received.

It should be noted that a group management server according to the present solution is preferably configured -to act as any of the servers 202A, 202B and 202X described above. Thus, an inventive group management server is preferably capable of maintaining member lists and send group event notifications to other concerned group management servers (as the above-described server 202A), as well as maintaining group lists, receiving such group event notifications and inform clients accordingly (as the above-described servers 202B,X).

Finally, an inventive group management server will now generally be described with reference to Fig. 8, illustrating a schematic block diagram of the server 800 comprising plural logic units 802-812. It should be noted that the various units therein are purely logic, and in practice, the described functions can be implemented in many different ways using suitable hardware and software, which however lies within the scope of a person skilled in the art and is therefore not necessary to describe in more detail.

A group creation and modification request receiving unit 802 is configured to receive group creation and modification requests from clients, e.g. as in the above-described steps 2.1, 3.1, 4.1 and 5.1. A member list management unit 804 is configured to maintain member lists of groups for clients, e.g. as in the above-described steps 2.2, 3.2, 4.2 and 5.4. A group event notification unit 806 is configured to send group event notifications to other group management servers, e.g. as in the above-described steps 2.3, 2.4, 3.3, 4.3 and 5.3.

A group event receiving unit 808 is configured to receive group event notifications from other group management servers, e.g. as in the above-described steps 2.3, 2.6, 3.3, 4.3 and 5.3. A group list management unit 810 is configured to maintain group lists for clients, e.g. as in the above-described steps 2.5, 3.4, 4.4 and 5.2. Finally, a membership notification unit 812 is configured to receive membership requests and notify clients on the current status of his/her group list, e.g. as in the above-described steps 2.7, 3.5, 4.5 and 5.5.

The present invention provides a simple yet effective solution for making membership information in communication groups easily available to clients, such that a client can find out which active communication groups he/she is a member of, without elaborate searching. Further, this information is available without significant delay as only one server is contacted. A client creating a group is also spared the labour of informing the members on their membership in the group, since this information is made available by means of the present solution, in particular if the members are automatically notified as soon as they become members. Privacy is also enhanced since it is not necessary to provide this information by calling, sending e-mails, etc, which might be improperly intercepted. It is also possible for clients to store their own information in connection with their group lists, e.g. any identities (PSI's) of open groups they might join in the future.

While the invention has been described with reference to specific exemplary embodiments, the description is only intended to illustrate the inventive concept and should not be taken as limiting the scope of the invention, which is defined by the appended claims.

## Claims

1. A method of making communication group information available to members of a communication group, comprising the following steps:
- receiving a group creation request from a first client (A) in a first group management server (202A) in a home network of the first client for a new communication group that includes at least a second client (B), and
- storing a member list (L₁) of members in said group including the second client,
- sending a group event notification from the first group management server to a second group management server (202B) in a home network of the second client, to announce that the second client is a member of the new communication group,
**characterized by** the further steps of :
the second group management server maintains a group list (L₂) for the second client comprising group identities of communication groups of which the second client is a member, and adds the new communication group to the group list in response to receiving said group event notification, and wherein the second group management server sends a group membership notification containing said group list to the second client, either in response to receiving a membership information request from the second client or automatically whenever the group list is changed.

2. A method according to claim 1, wherein the group contains a plurality of members belonging to different home networks, **characterised in that** the group event notification is sent from the first group management server to the home networks of the members in the group, to announce that their respective clients have become members in the new group.

3. A method according to claim 2, **characterised in that** a TTL (Time To Live) period is set for the member list during which it is considered to be valid, and that the member list is refreshed just before expiry of the TTL, if the group is continued, by sending a refresh message with a new TTL to the home networks of the members in the list.

4. A method according to any of claims 1-3, wherein a group identity is assigned to the group which is stored together with said member list, **characterised in that** the group event notification includes the group identity.

5. A method according to any of claims 1-4, **characterised in that** an existing group is deleted from the group list if the second client is removed as a member from said existing group or if the existing group is terminated altogether.

6. A method according to any of claims 1-5, **characterised by** the further steps of:
- receiving a group modification request in the first group management server from the first client for adding a new member to the new group,
- storing the new member in said group member list, and
- sending a group event notification from the first group management server to the home network of the new member, to inform said home network of the new member that he/she has become a member in the group.

7. A method according to any of claims 1-6, **characterised by** the further steps of:
- receiving a group modification request in the first group management server from the first client for removing a member from the group,
- deleting the removed member from said member list, and
- sending a membership invalidity message from the first group management server to the home network of the removed member, to inform said home network of the removed member that he/she has been removed from the group.

8. A method according to claim 3 and 7, **characterised in that** the membership invalidity message is a refresh message with the TTL set to zero, thereby indicating that the removed member's membership has become invalid.

9. A method according to any of claims 1-8, **characterised by** the following steps, as performed by the second group management server:
- receiving a group reject message from a withdrawing client for rejecting membership in the group,
- deleting the rejected group from the group list for the withdrawing client, and
- sending a membership rejection message to the first group management server to announce that the withdrawing client has withdrawn from the group.

10. A first group management server (202A) for making communication group information available to members of a communication group, the first group management server (202A) being adapted to receive a group creation request from a first client (A) for a new communication group including at least a second client (B), and to store a member list (L₁) of members in the group including the second client, wherein the first group management server is further adapted to send a group event notification to a second group management server (202B) in a home network of the second client, announcing that the second client is a member of the new communication group, thereby enabling the second group management server to maintain a group list (L₂) for the second client comprising group identities of communication groups of which the second client is a member, and to add the new communication group to the group list in response to receiving said group event notification, **characterized in that**
the first group management server is further adapted to maintain a group list for a third client, comprising group identities of a plurality of communication groups of which the third client is a member, and to send a group membership notification containing said group list of the third client to the third client, either in response to receiving a membership information request from the third client or automatically whenever the group list of the third client is changed.

11. A first group management server (202A) according to claim 10, wherein the group contains a plurality of members belonging to different home networks, **characterised in that** the first group management server is further adapted to send the group event notification to the home networks of the members in the group, to announce that their respective clients have become members in the new group.

12. A first group management server (202A) according to claim 11, **characterised in that** the first group management server is further adapted to set a TTL (Time To Live) period for the member list during which it is considered to be valid, and refresh the list just before expiry of the TTL, if the group is continued, by sending a refresh message with a new TTL to the home networks of the members in the list.

13. A first group management server (202A) according to any of claims 10-12, wherein a group identity is assigned to the group which is stored together with said member list, **characterised in that** the group event notification includes the group identity.

14. A first group management server (202A) according to any of claims 10-13, **characterised in that** the first group management server is adapted to add a new group to the group list of the third client when the third client becomes a member in said new group.

15. A first group management server (202A) according to any of claims 10-14, **characterised in that** the first group management server is further adapted to delete an existing group from the group list of the third client if the third client is removed as a member from said existing group or if the group is terminated altogether.

16. A first group management server (202A) according to any of claims 10-15, **characterised in that** the first group management server is further adapted to receive a group modification request from the first client for adding a new member to the group, store the new member in said group member list, and to send a group event notification to the home network of the new member, to announce that he/she has become a member in the group.

17. A first group management server (202A) according to any of claims 10-16, **characterised in that** the first group management server is further adapted to receive a group modification request from the first client for removing a member from the group, delete the removed member from said member list, and to send a membership invalidity message to the home network of the removed member, to announce that he/she has been removed from the group.

18. A first group management server (202A) according to claim 12 and 17, **characterised in that** the membership invalidity message is a refresh message with the TTL set to zero, thereby indicating that the removed member's membership has become invalid.

19. A first group management server (202A) according to any of claims 10-18, **characterised in that** the first group management server is further adapted to receive a group reject message from a withdrawing client for rejecting membership in the group, delete the rejected group from a group list for the withdrawing client, and send a membership rejection message to a home network of the withdrawing client, to announce that said withdrawing client has withdrawn from the group.

20. A communication system for making communication group information available to group members, comprising
- a first group management server in a home network of a first client, and
- a second group management server in a home network of a second client,
wherein the first group management server is adapted to receive a group creation request from the first client for a new group including at least the second client, and to store a member list of members in the group including the second client,
wherein
the first group management server is further adapted to send a group event notification to the second group management server to announce that the second client has become a member in the new group, **characterized in that**
the second group management server is adapted to maintain a group list for the second client, comprising group identities of a plurality of communication groups of which the second client is a member, and to add the new group to the group list in response to receiving said group event notification, and to send a group membership notification containing said group list to the second client, either in response to receiving a membership information request from the second client or automatically whenever the group list is changed.

## Patentansprüche

1. Verfahren, um Mitgliedern einer Kommunikationsgruppe Kommunikationsgruppeninformation verfügbar zu machen, folgende Schritte umfassend:
- Empfangen einer Gruppenerzeugungsanforderung von einem ersten Client (A) in einem ersten Gruppenverwaltungsserver (202A) in einem Heimnetz des ersten Clients für eine neue Kommunikationsgruppe, die mindestens einen zweiten Client (B) einschließt, und
- Speichern einer Mitgliederliste (L₁) von Mitgliedern in der Gruppe einschließlich des zweiten Clients,
- Senden einer Gruppenereignis-Hinweisgabe vom ersten Gruppenverwaltungsserver an einen zweiten Gruppenverwaltungsserver (202B) in einem Heimnetz des zweiten Clients, um bekannt zu geben, dass der zweite Client ein Mitglied der neuen Kommunikationsgruppe ist,
**gekennzeichnet durch** folgende weitere Schritte:
- der zweite Gruppenverwaltungsserver pflegt eine Gruppenliste (L₂) für den zweiten Client, die Gruppenidentitäten von Kommunikationsgruppen umfasst, von denen der zweite Client ein Mitglied ist, und fügt als Antwort auf den Empfang der Gruppenereignis-Hinweisgabe die neue Kommunikationsgruppe der Gruppenliste hinzu, und der zweite Gruppenverwaltungsserver sendet eine die Gruppenliste enthaltende Gruppenmitgliedschafts-Hinweisgabe an den zweiten Client, entweder als Antwort auf den Empfang einer Mitgliedschaftsinformationsanforderung vom zweiten Client oder automatisch immer dann, wenn die Gruppenliste geändert wird.

2. Verfahren nach Anspruch 1, worin die Gruppe eine Vielzahl von Mitgliedern enthält, die verschiedenen Heimnetzen angehören, **dadurch gekennzeichnet, dass** die Gruppenereignis-Hinweisgabe vom ersten Gruppenverwaltungsserver an die Heimnetze der Mitglieder in der Gruppe gesendet wird, um bekannt zu geben, dass ihre jeweiligen Clients Mitglieder in der neuen Gruppe geworden sind.

3. Verfahren nach Anspruch 2, **dadurch gekennzeichnet, dass** eine TTL(Lebenszeit)-Periode für die Mitgliederliste festgesetzt wird, während der sie als gültig angesehen wird, und dass die Mitgliederliste kurz vor Ablauf der TTL aufgefrischt wird, falls die Gruppe fortgeführt wird, indem eine Auffrischungsnachricht mit einer neuen TTL an die Heimnetze der Mitglieder in der Liste gesendet wird.

4. Verfahren nach einem der Ansprüche 1-3, worin eine Gruppenidentität der Gruppe zugewiesen wird, die zusammen mit der Mitgliederliste gespeichert wird, **dadurch gekennzeichnet, dass** die Gruppenereignis-Hinweisgabe die Gruppenidentität einschließt.

5. Verfahren nach einem der Ansprüche 1-4, **dadurch gekennzeichnet, dass** eine bestehende Gruppe aus der Gruppenliste gelöscht wird, falls der zweite Client als ein Mitglied aus der bestehenden Gruppe entfernt wird oder falls die bestehende Gruppe ganz aufgelöst wird.

6. Verfahren nach einem der Ansprüche 1-5, durch die folgenden weiteren Schritte gekennzeichnet: - Empfangen einer Gruppenmodifikationsanforderung im ersten Gruppenverwaltungsserver vom ersten Client, um der neuen Gruppe ein neues Mitglied hinzuzufügen,
- Speichern des neuen Mitglieds in der Gruppenmitgliederliste, und
- Senden einer Gruppenereignis-Hinweisgabe vom ersten Gruppenverwaltungsserver an das Heimnetz des neuen Mitglieds, um das Heimnetz über das neue Mitglied dahingehend zu informieren, dass er/sie ein Mitglied in der Gruppe geworden ist.

7. Verfahren nach einem der Ansprüche 1-6, durch die folgenden weiteren Schritte gekennzeichnet:
- Empfangen einer Gruppenmodifikationsanforderung im ersten Gruppenverwaltungsserver vom ersten Client, um ein Mitglied aus der Gruppe zu entfernen,
- Löschen des entfernten Mitglieds aus der Mitgliederliste, und
- Senden einer Mitgliedschaftsungültigkeitsnachricht vom ersten Gruppenverwaltungsserver an das Heimnetz des entfernten Mitglieds, um das Heimnetz über das entfernte Mitglied dahingehend zu informieren, dass er/sie aus der Gruppe entfernt wurde.

8. Verfahren nach Anspruch 3 und 7, **dadurch gekennzeichnet, dass** die Mitgliedschaftsungültigkeitsnachricht eine Auffrischungsnachricht mit auf null gesetzter TTL ist, wodurch angezeigt wird, dass die Mitgliedschaft des entfernten Mitglieds ungültig geworden ist.

9. Verfahren nach einem der Ansprüche 1-8, durch die folgenden Schritte gekennzeichnet, wie sie vom zweiten Gruppenverwaltungsserver ausgeführt werden:
- Empfangen einer Gruppenablehnungsnachricht von einem zurücktretende Client zum Ablehnen von Mitgliedschaft in der Gruppe,
- Löschen der abgelehnten Gruppe aus der Gruppenliste für den zurücktretenden Client, und
- Senden einer Mitgliedschaftsablehnungsnachricht an den ersten Gruppenverwaltungsserver, um bekannt zu geben, dass der zurücktretende Client aus der Gruppe zurückgetreten ist.

10. Erster Gruppenverwaltungsserver (202A), um Mitgliedern einer Kommunikationsgruppe Kommunikationsgruppeninformation verfügbar zu machen, wobei der erste Gruppenverwaltungsserver (202A) dazu angepasst ist, eine Gruppenerzeugungsanforderung von einem ersten Client (A) für eine neue Kommunikationsgruppe zu empfangen, die mindestens einen zweiten Client (B) einschließt, und eine Mitgliederliste (L₁) von Mitgliedern in der den zweiten Client einschließenden Gruppe zu speichern, worin der erste Gruppenverwaltungsserver außerdem dazu angepasst ist, eine Gruppenereignis-Hinweisgabe an einen zweiten Gruppenverwaltungsserver (202B) in einem Heimnetz des zweiten Clients zu senden, die bekannt gibt, dass der zweite Client ein Mitglied der neuen Kommunikationsgruppe ist, wodurch dem zweiten Gruppenverwaltungsserver ermöglicht wird, eine Gruppenliste (L₂) für den zweiten Client zu pflegen, die Gruppenidentitäten von Kommunikationsgruppen umfasst, von denen der zweite Client ein Mitglied ist, und als Antwort auf den Empfang der Gruppenereignis-Hinweisgabe die neue Kommunikationsgruppe der Gruppenliste hinzuzufügen, **dadurch gekennzeichnet, dass**
der erste Gruppenverwaltungsserver außerdem dazu angepasst ist, eine Gruppenliste für einen dritten Client zu pflegen, die Gruppenidentitäten einer Vielzahl von Kommunikationsgruppen umfasst, von denen der dritte Client ein Mitglied ist, und eine die Gruppenliste des dritten Clients einschließende Gruppenmitgliedschafts-Hinweisgabe an den dritten Client zu senden, entweder als Antwort auf den Empfang einer Mitgliedschaftsinformationsanforderung vom dritten Client oder automatisch immer dann, wenn die Gruppenliste des dritten Clients geändert wird.

11. Erster Gruppenverwaltungsserver (202A) nach Anspruch 10, worin die Gruppe eine Vielzahl von Mitgliedern enthält, die verschiedenen Heimnetzen angehören, **dadurch gekennzeichnet, dass** der erste Gruppenverwaltungsserver außerdem dazu angepasst ist, die Gruppenereignis-Hinweisgabe an die Heimnetze der Mitglieder in der Gruppe zu senden, um bekannt zu geben, dass ihre jeweiligen Clients Mitglieder in der neuen Gruppe geworden sind.

12. Erster Gruppenverwaltungsserver (202A) nach Anspruch 11, **dadurch gekennzeichnet, dass** der ersten Gruppenverwaltungsserver außerdem dazu angepasst ist, eine TTL(Lebenszeit)-Periode für die Mitgliederliste festzusetzen, während der sie als gültig angesehen wird, und die Liste kurz vor Ablauf der TTL aufzufrischen, falls die Gruppe fortgeführt wird, indem eine Auffrischungsnachricht mit einer neuen TTL an die Heimnetze der Mitglieder in der Liste gesendet wird.

13. Erster Gruppenverwaltungsserver (202A) nach einem der Ansprüche 10-12, worin eine Gruppenidentität der Gruppe zugewiesen wird, die zusammen mit der Mitgliederliste gespeichert wird, **dadurch gekennzeichnet, dass** die Gruppenereignis-Hinweisgabe die Gruppenidentität einschließt.

14. Erster Gruppenverwaltungsserver (202A) nach einem der Ansprüche 10-13, **dadurch gekennzeichnet, dass** der erste Gruppenverwaltungsserver dazu angepasst ist, eine neue Gruppe der Gruppenliste des dritten Clients hinzuzufügen, wenn der dritte Client ein Mitglied in der neuen Gruppe wird.

15. Erster Gruppenverwaltungsserver (202A) nach einem der Ansprüche 10-14, **dadurch gekennzeichnet, dass** der erste Gruppenverwaltungsserver außerdem dazu angepasst ist, eine bestehende Gruppe aus der Gruppenliste des dritten Clients zu löschen, falls der dritte Client als ein Mitglied aus der bestehenden Gruppe entfernt wird oder falls die Gruppe ganz aufgelöst wird.

16. Erster Gruppenverwaltungsserver (202A) nach einem der Ansprüche 10-15, **dadurch gekennzeichnet, dass** der erste Gruppenverwaltungsserver außerdem dazu angepasst ist, eine Gruppenmodifikationsanforderung vom ersten Client zu empfangen, um ein neues Mitglied der Gruppe hinzuzufügen, das neue Mitglied in der Gruppenmitgliederliste zu speichern und eine Gruppenereignis-Hinweisgabe an das Heimnetz des neuen Mitglieds zu senden, um bekannt zu geben, dass er/sie ein Mitglied in der Gruppe geworden ist.

17. Erster Gruppenverwaltungsserver (202A) nach einem der Ansprüche 10-16, **dadurch gekennzeichnet, dass** der erste Gruppenverwaltungsserver außerdem dazu angepasst ist, eine Gruppenmodifikationsanforderung vom ersten Client zu empfangen, um ein Mitglied aus der Gruppe zu entfernen, das entfernte Mitglied aus der Mitgliederliste zu löschen und eine Mitgliedschaftsungültigkeitsnachricht an das Heimnetz des entfernten Mitglieds zu senden, um bekannt zu geben, dass er/sie aus der Gruppe entfernt wurde.

18. Erster Gruppenverwaltungsserver (202A) nach Anspruch 12 und 17, **dadurch gekennzeichnet, dass** die Mitgliedschaftsungültigkeitsnachricht eine Auffrischungsnachricht mit auf null gesetzter TTL ist, wodurch angezeigt wird, dass die Mitgliedschaft des entfernten Mitglieds ungültig geworden ist.

19. Erster Gruppenverwaltungsserver (202A) nach einem der Ansprüche 10-18, **dadurch gekennzeichnet, dass** der erste Gruppenverwaltungsserver außerdem dazu angepasst ist, eine Gruppenablehnungsnachricht von einem zurücktretenden Client zu empfangen, um Mitgliedschaft in der Gruppe abzulehnen, die abgelehnte Gruppe aus einer Gruppenliste für den zurücktretenden Client zu löschen und eine Mitgliedschaftsablehnungsnachricht an ein Heimnetz des zurücktretenden Clients zu senden, um bekannt zu geben, dass der zurücktretende Client aus der Gruppe zurückgetreten ist.

20. Kommunikationssystem, um Gruppenmitgliedern Kommunikationsgruppeninformation verfügbar zu machen, Folgendes umfassend:
- einen ersten Gruppenverwaltungsserver in einem Heimnetz eines ersten Clients, und
- einen zweiten Gruppenverwaltungsserver in einem Heimnetz eines zweiten Clients,
worin der erste Gruppenverwaltungsserver dazu angepasst ist, eine Gruppenerzeugungsanforderung vom ersten Client für eine neue Gruppe zu empfangen, die mindestens den zweiten Client einschließt, und eine Mitgliederliste von Mitgliedern in der Gruppe zu speichern, die den zweiten Client einschließt,
worin der erste Gruppenverwaltungsserver außerdem dazu angepasst ist, eine Gruppenereignis-Hinweisgabe an den zweiten Gruppenverwaltungsserver zu senden, um bekannt zu geben, dass der zweite Client ein Mitglied in der neuen Gruppe geworden ist, **dadurch gekennzeichnet, dass**
der zweite Gruppenverwaltungsserver dazu angepasst ist, eine Gruppenliste für den zweiten Client zu pflegen, die Gruppenidentitäten einer Vielzahl von Kommunikationsgruppen umfasst, von denen der zweite Client ein Mitglied ist, und die neue Gruppe als Antwort auf den Empfang der Gruppenereignis-Hinweisgabe der Gruppenliste hinzuzufügen und eine die Gruppenliste enthaltende Gruppenmitgliedschafts-Hinweisgahe an den zweiten Client zu senden, entweder als Antwort auf den Empfang einer Mitgliedschaftsinformationsanforderung vom zweiten Client oder automatisch immer dann, wenn die Gruppenliste geändert wird.

## Revendications

1. Procédé consistant à rendre des informations de groupe de communication disponibles pour des membres d'un groupe de communication, comprenant les étapes suivantes :
- réception d'une demande de création de groupe provenant d'un premier client (A) dans un premier serveur de gestion de groupe (202A) dans un réseau domestique du premier client pour un nouveau groupe de communication qui comprend au moins un deuxième client (B), et
- stockage d'une liste de membres (L₁) de membres dans ledit groupe comprenant le deuxième client,
- envoi d'une notification d'événement de groupe depuis le premier serveur de gestion de groupe à un deuxième serveur de gestion de groupe (202B) dans un réseau domestique du deuxième client, pour annoncer que le deuxième client est un membre du nouveau groupe de communication,
**caractérisé par** les étapes supplémentaires suivantes :
- le deuxième serveur de gestion de groupe maintient une liste de groupes (L₂) pour le deuxième client comprenant des identités de groupe de groupes de communication dont le deuxième client est un membre, et ajoute le nouveau groupe de communication à la liste de groupes en réponse à la réception de ladite notification d'événement de groupe, et le deuxième serveur de gestion de groupe envoyant une notification d'appartenance de groupe contenant ladite liste de groupes au deuxième client, en réponse à la réception d'une demande d'information d'appartenance provenant du deuxième client ou automatiquement dès que la liste de groupes est modifiée.

2. Procédé selon la revendication 1, dans lequel le groupe contient une pluralité de membres appartenant à différents réseaux domestiques, **caractérisé en ce que** la notification d'événement de groupe est envoyée du premier serveur de gestion de groupe aux réseaux domestiques des membres dans le groupe, pour annoncer que leurs clients respectifs sont devenus des membres dans le nouveau groupe.

3. Procédé selon la revendication 2, **caractérisé en ce qu'**une période TTL (Time To Live) est définie pour la liste de membres pendant laquelle elle est considérée comme étant valide, et que la liste de membres est rafraîchie juste avant expiration du TTL, si le groupe est maintenu, en envoyant un message de rafraîchissement avec un nouveau TTL aux réseaux domestiques des membres dans la liste.

4. Procédé selon l'une quelconque des revendications 1 à 3, dans lequel une identité de groupe est assignée au groupe qui est stockée conjointement avec ladite liste de membres, **caractérisé en ce que** la notification d'événement de groupe comprend l'identité de groupe.

5. Procédé selon l'une quelconque des revendications 1 à 4, **caractérisé en ce qu'**un groupe existant est supprimé de la liste de groupes si le deuxième client est enlevé en tant que membre dudit groupe existant ou si le groupe existant est complètement terminé.

6. Procédé selon l'une quelconque des revendications 1 à 5, **caractérisé par** les étapes supplémentaires de :
- réception d'une demande de modification de groupe dans le premier serveur de gestion de groupe depuis le premier client pour ajouter un nouveau membre au nouveau groupe,
- stockage du nouveau membre dans ladite liste de membres de groupe, et
- envoi d'une notification d'événement de groupe depuis le premier serveur de gestion de groupe au réseau domestique du nouveau membre, pour informer ledit réseau domestique du nouveau membre qu'il/elle est devenu(e) un membre dans le groupe.

7. Procédé selon l'une quelconque des revendications 1 à 6, **caractérisé par** les étapes supplémentaires de :
- réception d'une demande de modification de groupe dans le premier serveur de gestion de groupe depuis le premier client pour enlever un membre du groupe,
- suppression du membre enlevé de ladite liste de membres, et
- envoi d'un message d'invalidité d'appartenance du premier serveur de gestion de groupe au réseau domestique du membre enlevé, pour informer ledit réseau domestique du membre enlevé qu'il/elle a été enlevé(e) du groupe.

8. Procédé selon la revendication 3 et 7, **caractérisé en ce que** le message d'invalidité d'appartenance est un message de rafraîchissement avec le TTL défini à zéro, de manière à indiquer que l'appartenance du membre enlevé est devenue invalide.

9. Procédé selon l'une quelconque des revendications 1 à 8, **caractérisé par** les étapes suivantes, telles qu'effectuées par le deuxième serveur de gestion de groupe :
- réception d'un message de rejet de groupe d'un client se retirant pour rejeter l'appartenance au groupe,
- suppression du groupe rejeté de la liste de groupes pour le client se retirant, et
- envoi d'un message de rejet d'appartenance au premier serveur de gestion de groupe pour annoncer que le client se retirant s'est retiré du groupe.

10. Premier serveur de gestion de groupe (202A) pour rendre des informations de groupe de communication disponibles pour les membres d'un groupe de communication, le premier serveur de gestion de groupe (202A) étant adapté pour recevoir une demande de création de groupe depuis un premier client (A) pour un nouveau groupe de communication comprenant au moins un deuxième client (B), et pour stocker une liste de membres (L₁) de membres dans le groupe comprenant le deuxième client, dans lequel le premier serveur de gestion de groupe est en outre adapté pour envoyer une notification d'événement de groupe à un deuxième serveur de gestion de groupe (202B) dans un réseau domestique du deuxième client, annonçant que le deuxième client est un membre du nouveau groupe de communication, de manière à permettre que le deuxième serveur de gestion de groupe maintienne une liste de groupes (L₂) pour le deuxième client comprenant des identités de groupe de groupes de communication dont le deuxième client est un membre, et pour ajouter le nouveau groupe de communication à la liste de groupes en réponse à la réception de ladite notification d'événement de groupe, **caractérisé en ce que**
le premier serveur de gestion de groupe est en outre adapté pour maintenir une liste de groupes pour un troisième client, comprenant des identités de groupe d'une pluralité de groupes de communication dont le troisième client est un membre, et pour envoyer une notification d'appartenance de groupe contenant ladite liste de groupes du troisième client au troisième client, en réponse à la réception d'une demande d'information d'appartenance depuis le troisième client ou automatiquement dès que la liste de groupes du troisième client est modifiée.

11. Premier serveur de gestion de groupe (202A) selon la revendication 10, dans lequel le groupe contient une pluralité de membres appartenant à différents réseaux domestiques, **caractérisé en ce que** le premier serveur de gestion de groupe est en outre adapté pour envoyer la notification d'événement de groupe aux réseaux domestiques des membres dans le groupe, pour annoncer que leurs clients respectifs sont devenus des membres dans le nouveau groupe.

12. Premier serveur de gestion de groupe (202A) selon la revendication 11, **caractérisé en ce que** le deuxième serveur de gestion de groupe est en outre adapté pour définir une période TTL (Time To Live) pour la liste de membres pendant laquelle elle est considérée comme étant valide, et rafraîchir la liste juste avant expiration du TTL, si le groupe est maintenu, en envoyant un message de rafraîchissement avec un nouveau TTL aux réseaux domestiques des membres dans la liste.

13. Premier serveur de gestion de groupe (202A) selon l'une quelconque des revendications 10 à 12, dans lequel une identité de groupe est affectée au groupe qui est stocké conjointement avec ladite liste de membres, **caractérisé en ce que** la notification d'événement de groupe comprend l'identité de groupe.

14. Premier serveur de gestion de groupe (202A) selon l'une quelconque des revendications 10 à 13, **caractérisé en ce que** le premier serveur de gestion de groupe est adapté pour ajouter un nouveau groupe à la liste de groupes du troisième client lorsque le troisième client devient un membre dans ledit nouveau groupe.

15. Premier serveur de gestion de groupe (202A) selon l'une quelconque des revendications 10 à 14, **caractérisé en ce que** le premier serveur de gestion de groupe est en outre adapté pour supprimer un groupe existant de la liste de groupes du troisième client si le troisième client est enlevé en tant que membre dudit groupe existant ou si le groupe est complètement terminé.

16. Premier serveur de gestion de groupe (202A) selon l'une quelconque des revendications 10 à 15, **caractérisé en ce que** le premier serveur de gestion de groupe est en outre adapté pour recevoir une demande de modification de groupe depuis le premier client pour ajouter un nouveau membre au groupe, stocker le nouveau membre dans ladite liste de membres de groupe, et pour envoyer une notification d'événement de groupe au réseau domestique du nouveau membre, pour annoncer qu'il/elle est devenu(e) un membre dans le groupe.

17. Premier serveur de gestion de groupe (202A) selon l'une quelconque des revendications 10 à 16, **caractérisé en ce que** le premier serveur de gestion de groupe est en outre adapté pour recevoir une demande de modification de groupe depuis le premier client pour enlever un membre du groupe, supprimer le membre enlevé de ladite liste de membres, et envoyer un message d'invalidité d'appartenance au réseau domestique du membre enlevé, pour annoncer qu'il/elle a été enlevé(e) du groupe.

18. Premier serveur de gestion de groupe (202A) selon la revendication 12 et 17, **caractérisé en ce que** le message d'invalidité d'appartenance est un message de rafraîchissement avec le TTL défini à zéro, de manière à indiquer que l'appartenance du membre enlevé est devenue invalide.

19. Premier serveur de gestion de groupe (202A) selon l'une quelconque des revendications 10 à 18, **caractérisé en ce que** le premier serveur de gestion de groupe est en outre adapté pour recevoir un message de rejet de groupe depuis un client se retirant pour rejeter l'appartenance au groupe, supprimer le groupe rejeté d'une liste de groupes pour le client se retirant, et envoyer un message de rejet d'appartenance à un réseau domestique du client se retirant, pour annoncer que ledit client se retirant s'est retiré du groupe.

20. Système de communication pour rendre des informations de groupe de communication disponibles pour les membres de groupe, comprenant
- un premier serveur de gestion de groupe dans un réseau domestique d'un premier client, et
- un deuxième serveur de gestion de groupe dans un réseau domestique d'un deuxième client,
dans lequel le premier serveur de gestion de groupe est adapté pour recevoir une demande de création de groupe depuis le premier client pour un nouveau groupe comprenant au moins le deuxième client, et pour stocker une liste de membres de membres dans le groupe comprenant le deuxième client,
dans lequel le premier serveur de gestion de groupe est en outre adapté pour envoyer une notification d'événement de groupe au deuxième serveur de gestion de groupe pour annoncer que le deuxième client est devenu un membre dans le nouveau groupe, **caractérisé en ce que**
le deuxième serveur de gestion de groupe est adapté pour maintenir une liste de groupes pour le deuxième client, comprenant des identités de groupe d'une pluralité de groupes de communication dont le deuxième client est un membre, et pour ajouter le nouveau groupe à la liste de groupes en réponse à la réception de ladite notification d'événement de groupe, et pour envoyer une notification d'appartenance de groupe contenant ladite liste de groupes au deuxième client, en réponse à la réception d'une demande d'information d'appartenance depuis le deuxième client ou automatiquement dès que la liste de groupes est modifiée.
